# EUROPEAN PATENT APPLICATION

(11) **EP 4 521 218 A1**
(43) Date of publication of application: **12.03.2025**
(21) Application number: 24198523.3
(22) Date of filing: 04.09.2024
(51) Int. Cl.: G06F 3/04817, G06F 3/0486, G06F 3/12

(54) **INFORMATION PROCESSING APPARATUS, CONTROL METHOD, AND PROGRAM**

(30) Priority: 08.09.2023 JP 2023146300
(71) Applicant: CANON KABUSHIKI KAISHA, Tokyo 146-8501 (JP)
(72) Inventor: KAWAI, Ryoya, Tokyo, 146-8501 (JP); KAWAI, Yu, Tokyo, 146-8501 (JP)
(74) Representative: Canon Europe Limited

(57) **Abstract**

A program is provided in which in a case where a predetermined file is present on the Internet, a predetermined application program attempts to acquire the predetermined file from a predetermined storage region at at least a predetermined time that is after the predetermined file downloaded to an information processing apparatus (101) via the Internet is completely stored in the predetermined storage region.

## Description

### BACKGROUND OF THE INVENTION

### Field of the Invention

The present invention relates to an information processing apparatus, a control method, and a program.

### Description of the Related Art

Japanese Patent Laid-Open No. 2020-154525 describes that an information processing apparatus receives an operation of dragging and dropping a file icon.

As a form in which an information processing apparatus receives an operation of dragging and dropping a file icon becomes more widespread, it is desired to improve the convenience of this form.

The present invention provides a technique for improving the convenience of a form in which an information processing apparatus receives an operation of dragging and dropping a file icon and/or for improving processing of one or more files at an information processing apparatus in the case where the information processing apparatus receives an operation of dragging and dropping one or more file icons.

### SUMMARY OF THE INVENTION

According to the present invention, a predetermined application program, such as a printing application program (also referred to as a printing application), causes a computer of an information processing apparatus to execute: in a case that the information processing apparatus receives a dragging operation (such as, an operation performed by a user) of dragging a file icon included in a screen displayed (for example, on a display unit of the information processing apparatus) by another application program (such as a file management application) different from the predetermined application program and a dropping operation (such as, an operation performed by a user) of dropping the dragged file icon on an application icon associated with the predetermined application program (for example, the application icon may be included in a screen (such as a home screen) displayed on the display unit of the information processing apparatus), attempting, by the predetermined application program and based on the reception of the dropping operation by the information processing apparatus, to acquire a predetermined file associated with the dropped predetermined file icon from a predetermined storage region, such as from (e.g. a region of) external storage or other storage means which may be part of the information processing apparatus (for example, the reception of the dropping operation corresponds to the reception of the dragged file icon on the application icon associated with the predetermined application program in or as part of the dropping operation); and in a case that the acquisition of the predetermined file by the predetermined application program is completed, transmitting, by the predetermined application program, a print job for causing a printing apparatus to print an image based on the predetermined file. In a case where the predetermined file is present on the Internet (or computer network or data network), the predetermined application program attempts to acquire the predetermined file from the predetermined storage region at least at a predetermined time, and the predetermined time is after the predetermined file downloaded to the information processing apparatus via the Internet is completely stored in the predetermined storage region.

Further features of the present invention will become apparent from the following description of example embodiments with reference to the attached drawings.

### BRIEF DESCRIPTION OF THE DRAWINGS

FIG. 1 is a diagram illustrating an example of a communication system.
FIG. 2 is a diagram illustrating an example of configurations of a terminal apparatus and a communication apparatus.
FIG. 3 is a flowchart illustrating a process that is executed by the terminal apparatus using an OS.
FIG. 4 is a flowchart illustrating a process that is executed by the terminal apparatus using a printing application.
FIGS. 5A to 5D are diagrams illustrating examples of screens displayed by the terminal apparatus.
FIGS. 6A to 6C are diagrams illustrating examples of screens displayed by the terminal apparatus.

### DESCRIPTION OF THE EMBODIMENTS

### First Embodiment

An information processing apparatus and a communication apparatus that are included in a communication system according to the present embodiment will be described. In the present embodiment, the information processing apparatus may be, for example, a smartphone. However, the information processing apparatus is not limited thereto. As the information processing apparatus, various apparatuses such as a terminal apparatus, a laptop PC, a tablet terminal, a personal digital assistant (PDA), and a digital camera can be used. In addition, in the present embodiment, the communication apparatus may be, for example, a printer or printing apparatus. However, the communication apparatus is not limited thereto. Various apparatuses can be used as the communication apparatus as long as the apparatuses can wirelessly communicate with the information processing apparatus. For example, in a case where the communication apparatus is a printer, an ink jet printer, a full-color laser beam printer, a monochrome printer, and the like can be used. Further, in addition to the printers, a copy machine, a facsimile machine, a terminal apparatus, a smartphone, a laptop PC, a tablet terminal, a PDA, a digital camera, a music playing device, a television, a smart speaker, and the like can be used as the communication apparatus. Further, a multi-function peripheral having a plurality of functions including a copy function, a facsimile function, and a print function can be used as the communication apparatus.

First, a system configuration for implementing the present embodiment will be described.

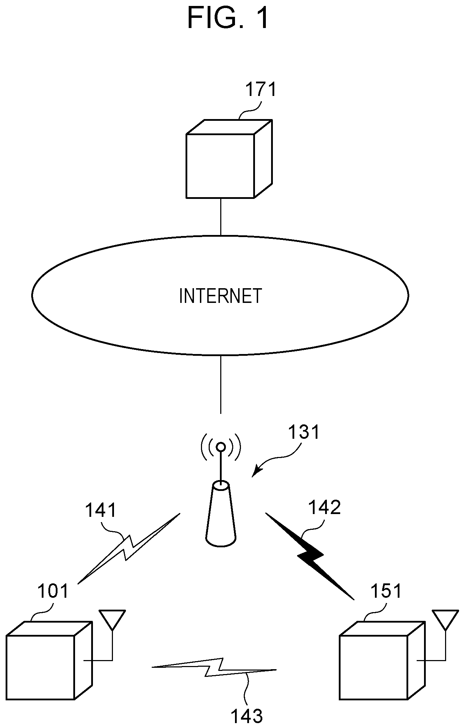

FIG. 1 is a diagram illustrating an example of the configuration of the communication system according to the present embodiment. The communication system includes a communication apparatus 151, a terminal apparatus 101, an access point (AP) 131, and an external server 171.

The terminal apparatus 101 is the information processing apparatus according to the present embodiment. The communication apparatus 151 is a communication apparatus such as that described above (e.g.a printing apparatus or printer). The AP 131 is an external apparatus present outside the terminal apparatus 101 and the communication apparatus 151. The external server 171 can provide a service through the Internet to the apparatuses connected to the AP 131.

The AP 131, the communication apparatus 151, and the terminal apparatus 101 are included in a local area network (LAN) formed by the AP 131. The AP 131 and the external server 171 are included in a wide area network (WAN).

In the present embodiment, in a case where an infrastructure connection described later is established, the terminal apparatus 101 can communicate with the communication apparatus 151 via the AP 131. In a case where a direct connection described later is established, the terminal apparatus 101 can directly communicate with the communication apparatus 151 without the AP 131. In the following description, a connection to an AP corresponds to a connection to a network formed by the AP. The AP may concurrently form a plurality of networks. In this case, the connection to the AP may be a connection to any one of the networks formed by the AP.

In the present embodiment, it is assumed that a connection 141 between the terminal apparatus 101 and the AP 131 and a connection 142 between the communication apparatus 151 and the AP 131 are connections by a communication method based on the IEEE802.11 series of standards. Specifically, the communication method based on the IEEE802.11 series of standards is Wireless Fidelity (Wi-Fi) (registered trademark). In the present embodiment, it is assumed that a connection 143 between the terminal apparatus 101 and the communication apparatus 151 is a connection by Wi-Fi or a connection by Bluetooth (registered trademark) Low Energy (BLE).

The communication method used for each of the connections is not limited thereto and may be Bluetooth Classic, Wi-Fi Aware, near-field communication (NFC), or the like. The AP 131 and the external server 171 can communicate with each other via a computer network or data network, such as the Internet. In a state in which the AP 131 is connected to the Internet, the Internet is available for use by the apparatuses (terminal apparatus 101 and communication apparatus 151) connected to the AP 131. Each of the connection 141 between the terminal apparatus 101 and the AP 131 and the connection 142 between the communication apparatus 151 and the AP 131 may be a connection by a wired LAN.

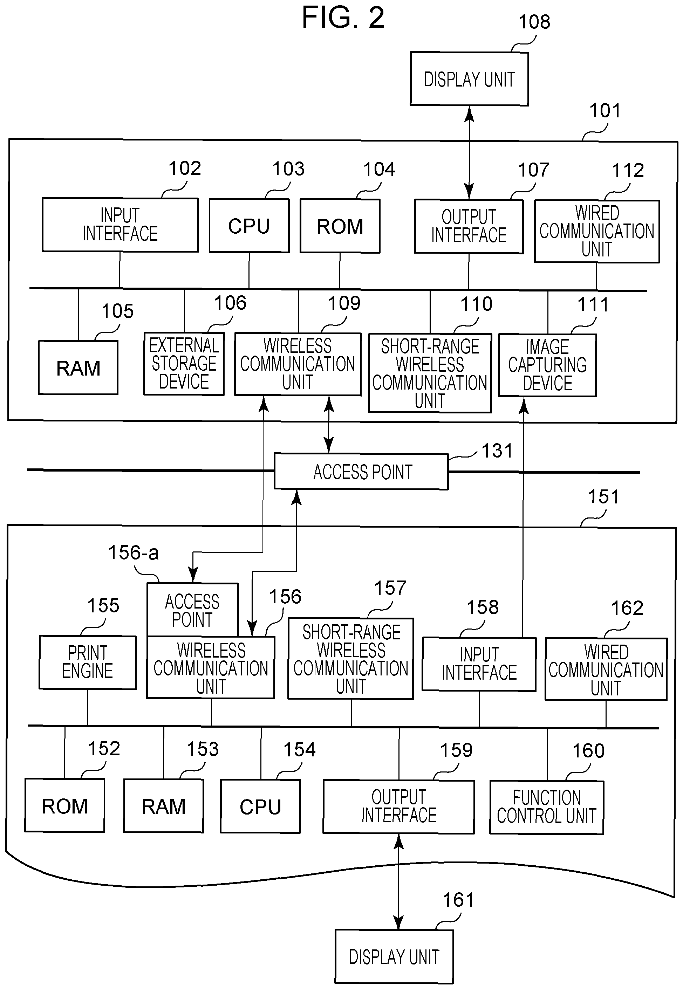

Next, a configuration of the information processing apparatus according to the present embodiment and a configuration of the communication apparatus that can communicate with the information processing apparatus according to the present embodiment will be described with reference to a block diagram of FIG. 2. In the present embodiment, the following configurations are described as an example. However, the present embodiment does not particularly limit functions to functions described with reference to FIG. 2 as long as an apparatus that can communicate with the communication apparatus can be used as the information processing apparatus according to the present embodiment.

The terminal apparatus 101 (e.g. information processing apparatus) includes an input interface 102, a CPU 103, a ROM 104, a RAM 105, an external storage or external storage device 106, an output interface 107, a display unit 108, a wireless communication unit 109, a short-range wireless communication unit 110, an image capturing device 111, and a wired communication unit 112. The CPU 103, the ROM 104, the RAM 105, and the like form a computer of the terminal apparatus 101. The terminal apparatus 101 is assumed to be a device such as a smartphone, but is not limited to the smartphone as discussed above.

The input interface 102 receives data input and an operation instruction from a user and includes a physical keyboard, buttons, a touch panel, and the like. The output interface 107 described later and the input interface 102 may be included in the same configuration, and output of a screen and reception of an operation from the user may be performed in the same configuration.

The CPU 103 is a system control unit and controls the entire terminal apparatus 101.

The ROM 104 stores fixed data such as a control program to be executed by the CPU 103, a data table, and an operating system (hereinafter referred to as an OS) program. In the present embodiment, control programs stored in the ROM 104 perform software execution control such as scheduling, task switching, and interruption processing under management by the embedded OS stored in the ROM 104. In the present embodiment, it is assumed that the OS included in the terminal apparatus 101 is iOS (registered trademark) 17. However, the OS is not limited thereto and may be an OS that supports a function of sharing a file by dragging and dropping described later. Specifically, for example, the OS may be iPadOS (registered trademark) 17. The OS may be iOS of a version later than iOS 17. In the present embodiment, the ROM 104 stores a printing application program (hereinafter referred to as a printing application). The printing application is installed in the terminal apparatus 101 from an external source by, for example, a store application program. The printing application is an application provided by a vendor of the communication apparatus 151. The printing application may have other functions other than a function of transmitting a print job for causing the communication apparatus 151 to perform printing. Specifically, for example, the other functions are a function of performing a network setup for the communication apparatus 151, and a function of transmitting a scan job for causing the communication apparatus 151 to perform scanning. In the present embodiment, processing described as processing executed by the OS is precisely processing executed by the CPU 103 in accordance with a program within the OS. Similarly, processing described as processing executed by the printing application is precisely processing executed by the CPU 103 in accordance with the printing application.

The RAM 105 includes a static random access memory (SRAM) that requires a backup power source. Since data is held in a primary battery (not illustrated) for data backup, important data such as a program control variable can be stored in the RAM 105 without being volatile. In addition, a memory area for storing setting information of the terminal apparatus 101, management data of the terminal apparatus 101, and the like is provided in the RAM 105. The RAM 105 is also used as a main memory and a work memory of the CPU 103.

The external storage 106 includes various programs including a print information generation program for generating print information interpretable by the communication apparatus 151 and an information transmission and reception control program for transmitting and receiving information to and from the communication apparatus 151 connected to the terminal apparatus 101 via the wireless communication unit 109. The external storage 106 stores various types of information that is used by these programs. The external storage 106 also stores image data or files acquired from another information processing apparatus and the Internet.

The output interface 107 controls displaying of data by the display unit 108 and notification of the state of the terminal apparatus 101 by the display unit 108.

The display unit 108 includes a light emitting diode (LED) and a liquid crystal display (LCD). The display unit 108 displays data and notifies the state of the terminal apparatus 101. A software keyboard that includes keys including a numeral input key, a mode setting key, a determination key, a cancel key, and a power supply key may be provided on the display unit 108, and the terminal apparatus 101 may receive input from the user via the display unit 108. In the present embodiment, it is assumed that the display unit 108 is a touch panel and can receive an operation, such as a dragging and/or dropping operation, by a user using an operator such as a finger or a pen.

The wireless communication unit 109 is wirelessly connected to apparatuses such as the communication apparatus 151 and the AP 131 and is configured to perform data communication with the apparatuses such as the communication apparatus 151 and the AP 131. For example, the wireless communication unit 109 may wirelessly directly communicate with the communication apparatus 151 or may communicate with the communication apparatus 151 via the AP 131 present outside the terminal apparatus 101 and the communication apparatus 151. In the present embodiment, it is assumed that, as a wireless communication method of the wireless communication unit 109, Wi-Fi that is a communication method based on the IEEE802.11 series of standards is used, but Bluetooth Classic or the like may be used. In addition, in the present embodiment, it is assumed that a wireless LAN is a Wi-Fi network. An example of the AP 131 is a device such as a wireless LAN router. In the present embodiment, a method in which the terminal apparatus 101 and the communication apparatus 151 are directly connected to each other without an external AP is referred to as a direct connection method. In the present embodiment, a method in which the terminal apparatus 101 and the communication apparatus 151 are connected to each other via an external AP is referred to as an infrastructure connection method.

The short-range wireless communication unit 110 performs data communication with an apparatus such as the communication apparatus 151 using a short-range wireless communication method and performs the communication using the communication method different from that of the wireless communication unit 109. The short-range wireless communication unit 110 can be connected to a short-range wireless communication unit 157 within the communication apparatus 151. Examples of the communication method of the short-range wireless communication unit 110 are BLE, Bluetooth Classic, Wi-Fi Aware, and NFC.

The image capturing device 111 converts an image captured by an image capturing element into digital data.

The digital data is temporarily stored in the RAM 105. Thereafter, a program executed by the CPU 103 converts the digital data into data in a predetermined image format and stores the converted data as image data to the external storage 106.

The wired communication unit 112 is connected to apparatuses such as the communication apparatus 151 and the AP 131 via a cable or the like and performs data communication with the apparatuses such as the communication apparatus 151 and the AP 131 via the cable or the like. For example, the wired communication unit 112 performs the communication by a wired LAN. In the present embodiment, it is assumed that, in the wired LAN, the communication is performed in accordance with an Ethernet standard. The wired communication unit 112 is not limited thereto. For example, the wired communication unit 112 may perform communication via a Universal Serial Bus (USB) cable.

The communication apparatus 151 includes a ROM 152, a RAM 153, a CPU 154, a print engine 155, a wireless communication unit 156, the short-range wireless communication unit 157, an input interface 158, an output interface 159, a function control unit 160, a display unit 161, a wired communication unit 162, and the like.

The ROM 152, the RAM 153, the CPU 154, and the like form a computer of the communication apparatus 151.

The wireless communication unit 156 is wirelessly connected to apparatuses such as the terminal apparatus 101 and the AP 131 and performs data communication with the apparatuses such as the terminal apparatus 101 and the AP 131. In the present embodiment, it is assumed that Wi-Fi is used as a wireless communication method of the wireless communication unit 156. However, Bluetooth Classic or the like may be used as the wireless communication method of the wireless communication unit 156. The wireless communication unit 156 includes, as an AP within the communication apparatus 151, an AP 156-a for connection to an apparatus such as the terminal apparatus 101. The AP 156-a can be connected to the wireless communication unit 109 of the terminal apparatus 101. The wireless communication unit 156 may directly communicate with the terminal apparatus 101 via the AP 156-a or may communicate with the terminal apparatus 101 via the AP 131. The AP 156-a may be hardware that functions as the AP. Alternatively, the wireless communication unit 156 may operate as the AP 156-a by software for functioning as the AP. In addition, the AP within the communication apparatus 151 may include a plurality of APs having different service set identifiers (SSIDs) and different passwords.

The RAM 153 includes a DRAM or the like that requires a backup power source. Data is held in the RAM 153 by supply of electric power (not illustrated) for data backup. Therefore, important data such as a program control variable can be stored in the RAM 153 without being volatile. In addition, the RAM 153 is used as a main memory and a work memory of the CPU 154 and stores various types of information as a receiving buffer for temporarily storing print information received from the terminal apparatus 101 or the like.

The ROM 152 stores fixed data such as a control program to be executed by the CPU 154, a data table, and an OS program. In the present embodiment, control programs stored in the ROM 152 perform software execution control such as scheduling, task switching, and interruption processing under management by the embedded OS stored in the ROM 152. In addition, the ROM 152 includes a memory area for storing data that is setting information of the communication apparatus 151, management data of the communication apparatus 151, and the like and is required to be held even in a case that electric power is not supplied.

The CPU 154 is a system control unit and controls the entire communication apparatus 151.

The print engine 155 uses a recording material such as ink to form an image on a recording medium such as paper and outputs a print result based on information stored in the RAM 153 and a print job received from the terminal apparatus 101 or the like. In this case, the print job transmitted from the terminal apparatus 101 or the like has a large amount of transmission data, high-speed communication is required, and thus the print job is received via the wireless communication unit 156 that can perform communication at higher speed than the short-range wireless communication unit 157.

The short-range wireless communication unit 157 communicates with an apparatus such as the terminal apparatus 101 using a short-range wireless communication method. Examples of the communication method of the short-range wireless communication unit 157 are BLE, Bluetooth Classic, and Wi-Fi Aware.

The input interface 158 receives data input and an operation instruction from the user and includes a physical keyboard, buttons, a touch panel, and the like. The output interface 159 described later and the input interface 158 may be included in the same configuration, and output of a screen and reception of an operation from the user may be performed in the same configuration. The output interface 159 controls displaying of data by the display unit 161 and notification of the state of the communication apparatus 151 by the display unit 161.

The function control unit 160 manages a function operation of determining whether functions included in the communication apparatus 151 are to be concurrently operated.

The display unit 161 includes a light emitting diode (LED) and a liquid crystal display (LCD). The display unit 161 displays data and notifies the state of the communication apparatus 151. A software keyboard that includes keys including a numeral input key, a mode setting key, a determination key, a cancel key, and a power supply key may be provided on the display unit 161, and the communication apparatus 151 may receive input from the user via the display unit 161.

The wired communication unit 162 is connected to apparatuses such as the terminal apparatus 101 and the AP 131 via a cable or the like and perform data communication with the apparatuses such as the terminal apparatus 101 and the AP 131 via the cable or the like. For example, the wired communication unit 162 performs the communication by a wired LAN. The wired communication unit 162 is not limited thereto and may perform the communication via, for example, a USB cable.

### Regarding Function of Sharing File by Dragging and Dropping

In the present embodiment, the terminal apparatus 101 can display a home screen for the OS. On the home screen for the OS, an icon (hereinafter referred to as an application icon) associated with an application installed in the terminal apparatus 101 is displayed, for example, on display unit 108. When application icon is tapped by a user, the application associated with the tapped application icon is activated. In the present embodiment, it is assumed that the terminal apparatus 101 has a file management application installed therein. The file management application can manage various files held in the terminal apparatus 101 and various files accessible by the terminal apparatus 101. The file management application can display, for example, on display unit 108, a list screen indicating a list of these files. On the list screen, for example, the files are displayed as icons (file icons) associated with the files. In the present embodiment, it is assumed that the file management application displays, on the list screen, file icons associated with a PDF format file, a JPEG format file, a HEIF format file, and a PNG format file. On the list screen, for example, file icons associated with other format files such as a BMP format file, a TIFF format file, a GIF format file, an MP3 format file, and an MP4 format file may be displayed. In the present embodiment, after the user selects a file icon displayed by the file management application by tapping the file icon using the operator, the user can drag the file icon without separating the operator from the display unit 108. In this case, a plurality of file icons may be selected, and the plurality of file icons may be dragged in a state in which the plurality of file icons are selected. In addition, when the user separately performs an operation for displaying the home screen for the OS in a state in which a selected icon is dragged, the screen displayed by the display unit 108 is switched from the list screen to the home screen for the OS. The operation for displaying the home screen for the OS is, for example, an operation of pressing a home button that is a physical button included in the terminal apparatus 101. For example, in a case where the terminal apparatus 101 is an apparatus (tablet terminal or the like) having a relatively large display unit, and a screen displayed by the file management application and the home screen for the OS are concurrently displayed, it is not necessary to separately perform the operation for displaying the home screen for the OS in a state in which the file icon is dragged. In the present embodiment, when the user moves the operator, with which the file icon is being dragged, to an application icon displayed on the home screen for the OS, and drops the file icon by separating the operator on the application icon from the display unit 108, a file associated with the selected file icon can be input to an application associated with the application icon. That is, in the present embodiment, in a case that the user drags a file icon displayed by the file management application to an application icon and drops the file icon on the application icon, a file associated with the file icon can be input to an application associated with the application icon.

Specifically, when the file icon is dropped on the application icon, the OS of the terminal apparatus 101 starts to store the file associated with the dropped file icon to a predetermined storage region, such as a region of external storage 106 or other storage means, accessible by the application associated with the application icon on which the file icon has been dropped. Thereafter, the OS of the terminal apparatus 101 instructs the application associated with the application icon on which the file has been dropped to execute a predetermined method that is scene(_:openURLContexts:) defined in the UISceneDelegate protocol. In the present embodiment, processing of instructing, by the OS, the application to execute the method corresponds to, in other words, processing of calling, by the OS, the method implemented in the application. In this case, the OS of the terminal apparatus 101 executes the instruction using, as an argument, a file path indicating a region in which the file associated with the dropped file icon is stored, and notifies the application of the file path. When the application executes the predetermined method based on the instruction described above, the application is activated and accesses the region indicated by the file path acquired from the OS to acquire the file. Then, the application executes processing associated with the acquired file. In this manner, the file from the file management application is enabled to be shared with the other application.

However, in a case where the file icon is dropped on the application icon and the application associated with the application icon cannot execute processing for the function of sharing a file by dragging and dropping, the application cannot appropriately process the file associated with the file icon dragged and dropped. Specifically, for example, even in a case where the application does not include a program for executing the predetermined method, and the application is instructed to execute the predetermined method from the OS of the terminal apparatus 101, the application cannot execute the predetermined method and cannot appropriately process the file. In addition, in a case where the application includes a program for executing the predetermined method and can acquire the file, and how to process the acquired file is not appropriately programmed, the application cannot appropriately process the file.

In the present embodiment, a form in which the printing application can appropriately process a file associated with a file icon dragged and dropped will be described.

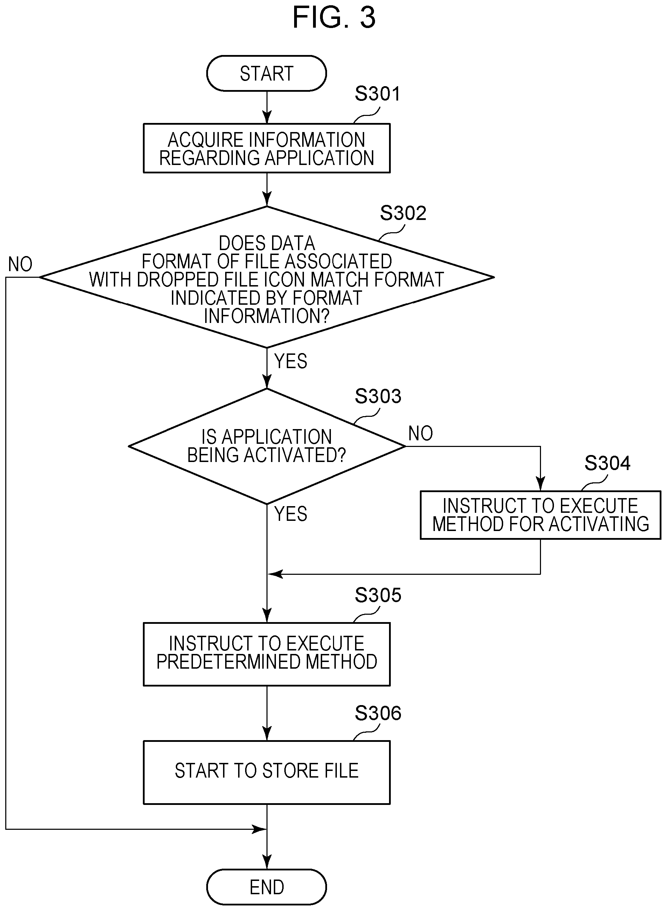

FIG. 3 is a flowchart illustrating a process that is executed by the terminal apparatus 101 using the OS. The flowchart in FIG. 3 is implemented by the CPU 103 reading the program (specifically, the OS) stored in the ROM 104 into the RAM 105 and executing the read program. It is assumed that the flowchart in FIG. 3 is started based on a file icon being dragged and dropped (e.g. dragging and dropping operations performed by a user) on an application icon associated with the printing application (also referred to as a predetermined application program).

In S301, the CPU 103 acquires information regarding the printing application from the printing application. In S301, the CPU 103 may acquire the information regarding the printing application from information managed by the OS. Specifically, for example, the information regarding the printing application includes format information indicating a file format supported by an application associated with an application icon on which a file icon has been dropped in a function of accepting sharing of a file from another application. The format information may indicate an extension corresponding to the file format supported by the application associated with the application icon on which the file has been dropped. In the present embodiment, it is assumed that the printing application supports the PDF format, the JPEG format, the HEIF format, and the PNG format in the function of accepting sharing of a file from another application. In other words, it is assumed that the format information of the printing application indicates the PDF format, the JPEG format, the HEIF format, and the PNG format. The printing application may be able to support a file in a format other than the above-described formats in a function of processing a file selected on a selection screen displayed on the printing application. Specifically, for example, on the selection screen displayed on the printing application, files in other formats such as the BMP format, the TIFF format, and GIF format may be selectable. In a case that a file in another format is selected, the printing application may be able to generate print data for printing the file in the other format and transmit the print data to the communication apparatus 151.

In S302, the CPU 103 determines whether a data format of the file associated with the file icon dropped on the application icon associated with the printing application matches the format indicated by the format information acquired in S301. In a case that the data format does not match the format indicated by the format information, the CPU 103 ends the process without instructing the printing application to execute a method. That is, in a case that the CPU 103 determines that the data format does not match the format indicated by the format information, the process ends without the printing application being activated and without the file associated with the file icon dropped on the application icon being acquired by the printing application (e.g. from predetermined storage region, such as from a region of the external storage 106 or other storage means). On the other hand, in a case that the CPU 103 determines that the data format matches the format indicated by the format information, the process proceeds to S303. The OS acquires, from the file management application, information indicating which format the file associated with the file icon dropped on the application icon associated with the printing application is in. It is assumed that, in a case that a plurality of file icons are simultaneously dropped on the application icon associated with the printing application, and at least one of a plurality of files associated with the plurality of file icons dropped matches the format indicated by the format information acquired in S301, the CPU 103 determines YES in S302. That is, it is assumed that, in a case that a plurality of file icons are simultaneously dropped on the application icon associated with the printing application, and all a plurality of files associated with the plurality of file icons dropped do not match the format indicated by the format information acquired in S301, the CPU 103 determines NO in S302.

In S303, the CPU 103 determines whether the printing application is being activated. The process of the flowchart in FIG. 3 is executed in a state in which the home screen for the OS is displayed. Therefore, a state in which the printing application is being activated at the time of making the determination in S303 corresponds to a state in which the printing application is being executed in a background process. In a case that the CPU 103 determines that the printing application is not being activated, the process proceeds to S304. In a case that the CPU 103 determines that the printing application is being activated, the process proceeds to S305.

In S304, the CPU 103 instructs the printing application to execute a method for activating the printing application. Therefore, the printing application is activated and the screen displayed on the display unit 108 is switched from the home screen for the OS to a screen displayed by the printing application.

In S305, the CPU 103 instructs the printing application to execute the predetermined method. Specifically, the CPU 103 uses the OS to execute an application programming interface (API) for causing the printing application to execute the predetermined method. As the API is executed, the printing application executes the predetermined method. As described above, the predetermined method is scene(_:openURLContexts:) defined in theUISceneDelegate protocol. In a case that the CPU 103 determines NO in S303, the CPU 103 may instruct the printing application to execute a method that is scene(_:willConnectTo:options:) defined in the UISceneDelegate protocol. In a case that the CPU 103 determines YES in S303, the CPU 103 may instruct the printing application to execute a method that is scene(_:openURLContexts:) defined in the UISceneDelegate protocol.

In this case, the CPU 103 executes the instruction using, as arguments, a file path indicating a region in which the dropped file is stored, identification information of the application (file management application in this case) that displayed the dropped file, and the like, and causes the printing application to acquire the information used as the arguments. In processing of instructing the printing application to execute the predetermined method, the CPU 103 can use a plurality of file paths as arguments. In other words, in the processing of instructing the printing application to execute the predetermined method, in a case that a plurality of file icons are dropped on the application icon associated with the printing application, the CPU 103 can cause the printing application to acquire a plurality of file paths associated with the plurality of files associated with the plurality of file icons dropped. In a case that a plurality of file icons are dropped on the application icon associated with the printing application, the printing application can acquire a plurality of files associated with the plurality of file icons dropped.

In S306, the CPU 103 starts to store the file associated with the file icon dropped on the application icon associated with the printing application to a predetermined storage region accessible by the printing application. In a case where the file associated with the file icon dropped is present on the Internet outside the terminal apparatus 101, the CPU 103 starts to receive the file from the Internet and starts to store the file to the predetermined storage region. The file on the Internet outside the terminal apparatus 101 is, in other words, a file that is held in a server outside the terminal apparatus 101 and can be acquired by the terminal apparatus 101 via the Internet. The CPU 103 may store, to the predetermined storage region, only a file in a data format supported by the printing application among the files associated with the file icons dropped, and may not store a file in a data format not supported by the printing application. In addition, in a case that a plurality of file icons are dropped on the application icon associated with the printing application, the CPU 103 starts to store, to the predetermined storage region, a plurality of files associated with the plurality of file icons. The order in which the processing in S305 and the processing in S306 are executed is not limited. That is, for example, after the storing of the file associated with the file icon dropped on the application icon associated with the printing application is started, the processing of instructing the printing application to execute the predetermined method may be executed and the file path may be acquired by the printing application. In addition, in a case where a file already stored in the predetermined storage region is present among the files associated with the file icons dropped on the application icon associated with the printing application, processing of storing the file to the predetermined storage region may be omitted. The file already stored in the predetermined storage region is, for example, a file associated with a file icon that was dropped on the application icon associated with the printing application in the past. After S306, the process of the flowchart in FIG. 3 ends.

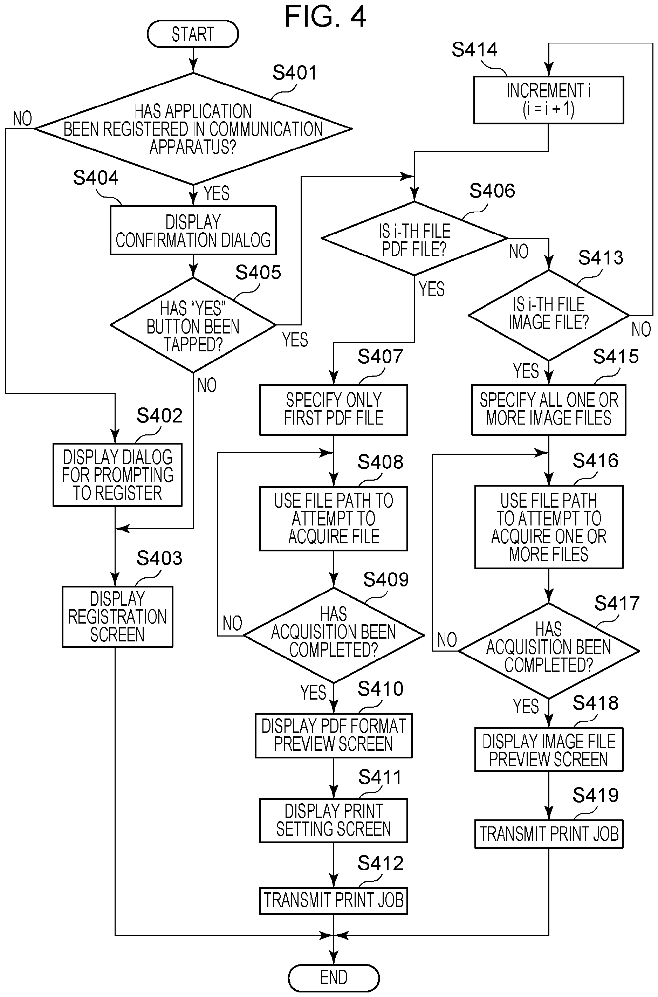

FIG. 4 is a flowchart illustrating a process that is executed by the terminal apparatus 101 using the printing application. The flowchart in FIG. 4 is implemented by the CPU 103 reading the program (specifically, the printing application) stored in the ROM 104 into the RAM 105 and executing the read program. It is assumed that the flowchart in FIG. 4 is started based on a file being dragged and dropped on the application icon associated with the printing application. More specifically, it is assumed that the flowchart in FIG. 4 is started based on an instruction from the OS to the printing application to execute the predetermined method.

In S401, the CPU 103 determines whether the communication apparatus (e.g. printing apparatus or printer) 151 has been registered in the printing application. In the present embodiment, the communication apparatus 151 can be registered in the printing application by the printing application acquiring ability information of the communication apparatus 151 from the communication apparatus 151 connected to the terminal apparatus 101 via a network, such as a network formed by AP 131. That is, a state in which the communication apparatus 151 is not registered in the printing application corresponds to a state in which the printing application has not registered the ability information of the communication apparatus 151 from the communication apparatus 151 connected to the terminal apparatus 101, such as via the network. In a case where the communication apparatus 151 is registered in the printing application, the printing application can transmit a print job and a scan job to the communication apparatus 151. In a case that the CPU 103 determines NO in S401, the process proceeds to S402. In a case that the CPU 103 determines YES in S401, the process proceeds to S404.

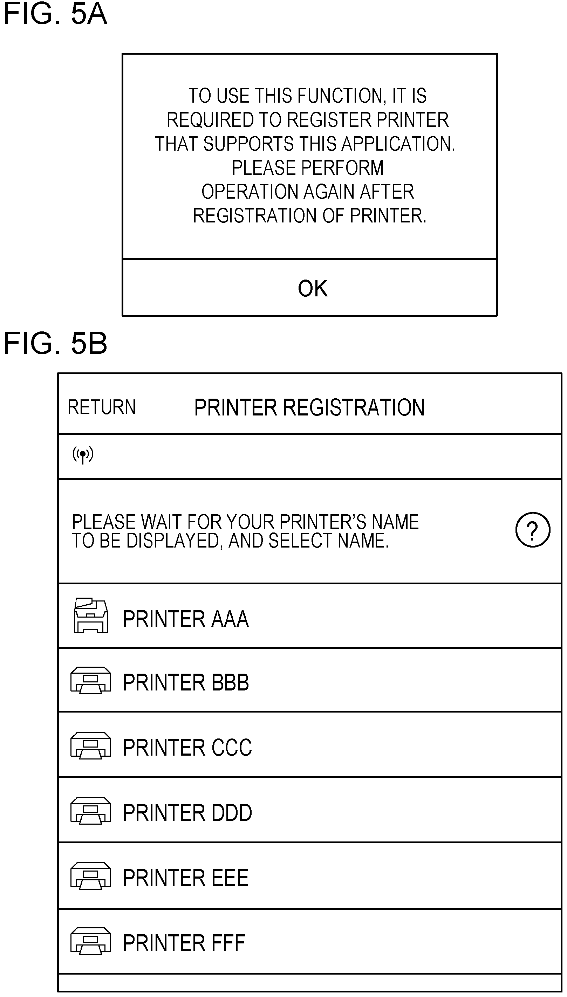

In S402, the CPU 103 displays a dialog including a message for prompting the user to register the communication apparatus 151 in the printing application. FIG. 5A illustrates an example of the dialog displayed in this case. The dialog includes an OK button. In a case that the OK button is tapped, the process proceeds to S403.

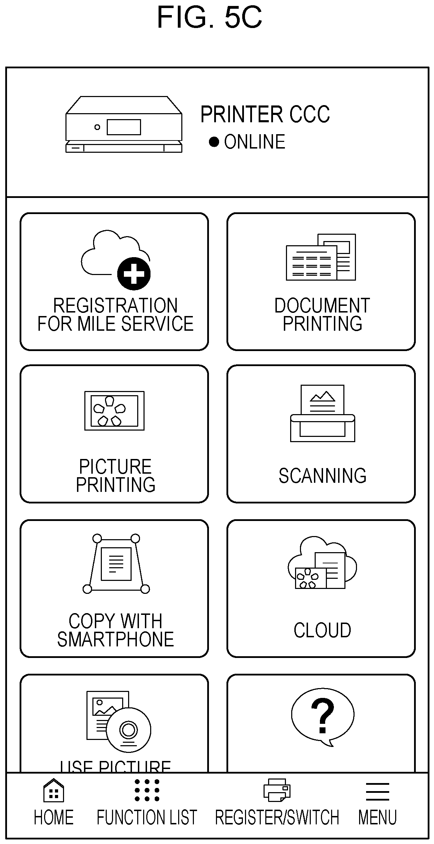

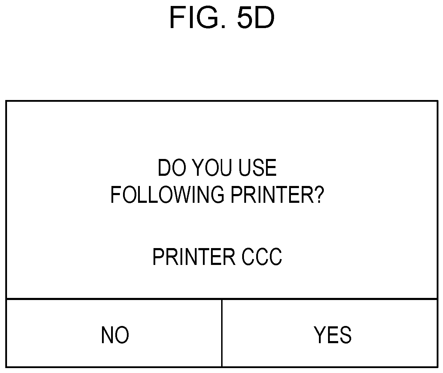

In S403, the CPU 103 displays a registration screen for registering the communication apparatus 151 in the printing application. FIG. 5B illustrates an example of the registration screen displayed in this case. In the processing in S403, the CPU 103 searches for one or more communication apparatuses 151 that are present on the network to which the terminal apparatus 101 is connected, and support the printing application. Then, a list of the communication apparatuses 151 found in this search is displayed on the registration screen. The one or more communication apparatuses 151 that support the printing application are provided by the same vendor as that of the printing application. When any one of the one or more communication apparatuses 151 is selected from the list, the CPU 103 starts to communicate with the selected communication apparatus 151 and acquires ability information of the selected communication apparatus 151. Therefore, the selected communication apparatus 151 is registered in the printing application. When the registration is completed, a home screen for the printing application is displayed as illustrated in FIG. 5C, and the process of the flowchart in FIG. 5 ends. On the home screen for the printing application, an icon indicating the communication apparatus 151 registered in the printing application is displayed. In addition, on the home screen for the printing application, buttons for executing various functions executable by the printing application are displayed. After the registration is completed, the process may proceed to S406 without displaying the home screen for the printing application in order to print a file dropped on the application icon associated with the printing application.

In S404 executed in a case that the result of the determination in S401 is YES, the CPU 103 displays a confirmation dialog for confirming with the user whether to perform printing using the communication apparatus 151 currently registered in the printing application. FIG. 5D illustrates an example of the dialog displayed in this case. In the confirmation dialog, the name or model number of the communication apparatus 151 currently registered in the printing application is displayed. In addition, the confirmation dialog includes a "Yes" button and a "No" button. When any one of the "Yes" button and the "No" button is tapped, the process proceeds to S405.

In S405, the CPU 103 determines whether the "Yes" button has been tapped. In a case that the CPU 103 determines No in S405 based on the "No" button tapped, the process proceeds to S403 and the CPU 103 executes processing of registering another communication apparatus 151 in the printing application. On the other hand, in a case that the CPU 103 determines YES in S405 based on the "Yes" button tapped, the process proceeds to S406.

In S406, the CPU 103 determines whether the i-th file in the order of files associated with file icons dropped on the application icon associated with the printing application is a PDF format file. The order of the files is the order in which the files are input from the OS to the printing application by the predetermined method. In addition, the order of the files may be the order of the files sorted in the list screen displayed by the file management application. That is, for example, in a case where names of the files are sorted in the list screen, the order of the files may be the order of the names. In a case where data sizes of the files are sorted in the list screen, the order of the files may be the order of the data sizes. An initial value of i is 1. In a case that the CPU 103 determines YES in S406, the process proceeds to S407. In a case that the CPU 103 determines NO in S406, the process proceeds to S413. The case where the CPU 103 determines NO in S406 is specifically a case where the i-th file in the order of the files is any one of a JPEG format file, a HEIF format file, and a PNG format file. The JPEG format file, the HEIF format file, and the PNG format file are image files. Each of the image files includes only an image for a single page, while a single PDF format file may include images for a plurality of pages.

In S407, the CPU 103 specifies (or selects) only the first file in the order of PDF format files among the files associated with the file icons dropped on the application icon associated with the printing application. Only the file specified in S407 among the files as associated with the file icons dropped on the application icon associated with the printing application is displayed on a preview screen. Specifically, for example, in a case where a file icon associated with only a single PDF format file is dropped on the application icon associated with the printing application, only the single file is specified. In addition, for example, in a case where a plurality of PDF format files are dropped on the application icon associated with the printing application, the first file in the order of the plurality of PDF format files is specified. Further, for example, in a case where files dropped on the application icon associated with the printing application include a file in a format not matching the format indicated by the format information and PDF format files, and the file in the format not matching the format indicated by the format information is input to the printing application earlier than the PDF format files in the order of the files, the file in the format not matching the format indicated by the format information is not specified, and the first file in the order of the PDF format files is specified.

In S408, the CPU 103 (or, for example, an attempting unit (103) or means) uses a file path received (e.g. by the CPU 103 or an acquisition unit (103) or means) from the OS to attempt to acquire the file that has been held in a region indicated by the received file path and has been specified in S407. As described above, the region indicated by the file path is within the above-described predetermined storage region (e.g. region of external storage 106 or other storage means).

In S409, the CPU 103 determines whether the acquisition of the file specified in S407 by the attempt in S408 has been completed. In a case that the CPU 103 determines YES in S409, the process proceeds to S410. In a case that the CPU 103 determines NO in S409, the process returns to S408. For example, in a case where a file associated with a dropped file icon is present on the Internet outside the terminal apparatus 101, the terminal apparatus 101 needs to acquire the file from the Internet and it takes time to complete the storing of the file. That is, in a case where a file associated with a dropped file icon is present on the Internet outside the terminal apparatus 101, at the time of the attempt made in S408 (that is, at the start time of the attempt in S408), the storing of the file to the predetermined storage region by the OS may not be completed. Therefore, in the present embodiment, the determination processing in S409 and the processing (e.g. in S408) due to the determination processing in S409 are repeatedly performed to repeatedly attempt to acquire the file until the acquisition of the file from the Internet and the storing of the file to the predetermined storage region are completed. For example, steps S408 and S409 can be repeated until the file to be acquired is completely stored in the predetermined storage region (e.g. a region in the external storage 106 or in other storage means). In a case where the data size of a file associated with a dropped file icon is large or the performance of the CPU 103 is low, it may take time to complete the storing of the file. In such a case, the repetition of the determination processing and the processing due to the determination processing is effective. The CPU 103 may stand by for a predetermined time period until an attempt to acquire the file is made again. In a case where the file is present on the Internet, the application program (for example, the CPU 103 executing the application program or an attempting unit or means) attempts to acquire the file from the predetermined storage region (e.g. a region in the external storage 106 or in other storage means) at at least a predetermined time or time period. The predetermined time is after the file downloaded to the terminal apparatus 101 via the Internet is completely stored in the predetermined storage region (e.g. after the storing of the file in the predetermined storage region is completed).

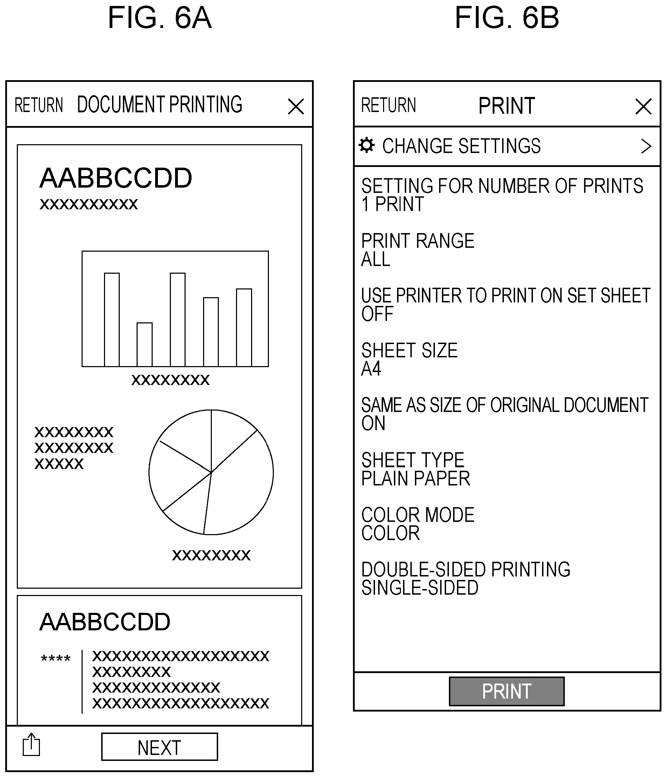

In S410, the CPU 103 uses the file acquired by the attempt in S408 to display a PDF format preview screen for previewing an image indicated by the file. FIG. 6A illustrates an example of the PDF format preview screen displayed in this case. In a case where the acquired file includes data for a plurality of pages, images for the plurality of pages can be displayed on the PDF format preview screen, and the image displayed on the PDF format preview screen is switched by performing a scroll operation on the PDF format preview screen. The PDF format preview screen includes a "next" button. When the "next" button is tapped, the process proceeds to S411.

In S411, the CPU 103 displays a print setting screen for entering a print setting to be used for printing the image previewed in S410. FIG. 6B illustrates an example of the print setting screen displayed in this case. The contents of print settings currently set are displayed on the print setting screen. The print setting screen includes a "change settings" button. When the "change settings" button is tapped, a change screen for changing the contents of the print settings is displayed. When the contents of the print settings are changed on the change screen, the contents displayed on the print setting screen are also changed. The print setting screen further includes a "print" button. When the "print" button is tapped, the process proceeds to S412.

In S412, the CPU 103 generates print data for printing, based on the print settings set in S409, the image indicated by the file acquired by the attempt in S408. Then, the CPU 103 (or, for example, transmission unit (103) or transmission means) transmits a print job including the print data to the communication apparatus 151 registered in the printing application. The communication apparatus 151 that has received the print job performs printing based on the print job to print the image indicated by the file acquired by the attempt in S408. After S412, the process of the flowchart in FIG. 4 ends.

In S413 executed in a case that the result of the determination in S406 is NO, the CPU 103 determines whether the i-th file in the order of the files associated with the file icons dropped on the application icon associated with the printing application is an image file. As described above, an image file is a file in a format matching the format indicated by the format information and is any one of a JPEG format file, a HEIF format file, and a PNG format file.

In a case that the CPU 103 determines YES in S413, the process proceeds to S415. In a case that the CPU 103 determines NO in S413, the process proceeds to S414. The case where the CPU 103 determines NO in S413 is specifically a case where the i-th file in the order of the files is not any of a PDF format file, a JPEG format file, a HEIF format file, and a PNG format file. In other words, the case where the CPU 103 determines NO in S413 is a case where the i-th file in the order of the files is in a format not matching the format indicated by the format information.

In S414, the CPU 103 increments the value of i by 1. That is, the CPU 103 sets, as a new value of i, a value obtained by adding 1 to the current value of i. Then, the CPU 103 causes the process to return to the processing in S406. Therefore, in the processing in S406 and the subsequent processing, a file of the incremented value in the order of the files is referenced.

In S415, the CPU 103 specifies all one or more image files among the files associated with the file icons dropped on the application icon associated with the printing application. The CPU 103 displays, on the preview screen, the one or more files specified in S415 among the files associated with the file icons dropped on the application icon associated with the printing application. Specifically, for example, in a case where only a single image file is a file associated with a file icon dropped on the application icon associated with the printing application, only the single file is specified. In addition, for example, in a case where a plurality of image files are files associated with file icons dropped on the application icon associated with the printing application, all the image files are specified. Further, for example, in a case where files associated with file icons dropped on the application icon associated with the printing application include a file in a format not matching the format indicated by the file information and image files, and the file in the format not matching the format indicated by the format information is input to the printing application earlier than the image files in the order of the files, the file in the format not matching the format indicated by the format information is not specified and all the image files are specified.

In S416, the CPU 103 uses the file path received from the OS to attempt to acquire the one or more files that are stored in the region indicated by the file path and have been specified in S415.

In S417, the CPU 103 determines whether the acquisition of the one or more files specified in S415 has been completed by the attempt in S416. In a case that the CPU 103 determines YES in S417, the process proceeds to S418. In a case that the CPU 103 determines NO in S417, the process returns to S416. As described above, in a case where a file associated with a dropped file icon is present on the Internet outside the terminal apparatus 101, the attempt to acquire the file is repeated until the acquisition of the file from the Internet and the storing of the file are completed.

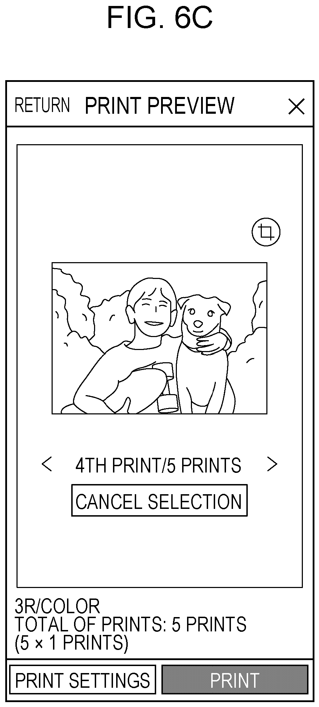

In S418, the CPU 103 uses the one or more files acquired by the attempt in S416 to display an image file preview screen for previewing one or more images indicated by the one or more files. FIG. 6C illustrates an example of the image file preview screen displayed in this case. The image file preview screen includes a preview region for displaying an image indicated by an acquired image file. In a case where a plurality of image files acquired are present, an image displayed in the preview region is switched from an image indicated by a first image file among the plurality of image files to an image indicated by a second image file among the plurality of image files by performing a scroll operation on the image file preview screen. On the image file preview screen, a print setting screen for entering a print setting to be used for printing the one or more files acquired by the attempt in S416 is displayed. On the print setting screen, the contents of print settings currently set are displayed. The print setting screen includes a "change settings" button. When the "change settings" button is tapped, a change screen for changing the contents of print settings is displayed. When the contents of the print settings are changed on the change screen, the contents displayed on the print setting screen are also changed. The image file preview screen includes a "print" button. When the "print" button is tapped, the process proceeds to S419.

In S419, the CPU 103 generates print data for printing, based on the print settings set in S418, the one or more images indicated by the one or more files acquired by the attempt in S416. The CPU 103 transmits a print job including the print data to the communication apparatus 151 registered in the printing application. In a case that a plurality of files are acquired by the attempt in S416, the CPU 103 transmits a print job including print data for printing a plurality of images indicated by the plurality of files to the communication apparatus 151 registered in the printing application. The communication apparatus 151 that has received the print job performs printing based on the print job to print the one or more images indicated by the one or more files acquired by the attempt in S416. After S419, the process of the flowchart in FIG. 4 ends.

In the present embodiment, as described above, processing that is executed in a case that a predetermined method is executed by the OS is programmed in the printing application, and thus the printing application can process a file associated with a dropped file icon.

In the present embodiment, it is possible to execute processing appropriate for a file format of a file associated with a dropped file icon. As described above, a single PDF format file may include images for a plurality of pages. Therefore, in a case that a plurality of file icons associated with a plurality of PDF format files are dropped on the application icon associated with the printing application, and a preview screen for printing the plurality of PDF format files is displayed, many pages need to be displayed for preview and a processing load of the printing application may be high. Meanwhile, a single image file includes only an image for a single page. Therefore, in a case that a plurality of file icons associated with a plurality of image files are dropped on the application icon associated with the printing application, and a preview screen for printing the plurality of image files is displayed, the processing load of the printing application is unlikely to be high. In the present embodiment, in a case that a plurality of file icons associated with a plurality of files are dropped, only a single PDF format file is specified and displayed for preview, a plurality of image files are specified and displayed for preview, and control can be performed to print many images at once while the processing load of the printing application is controlled such that the processing load of the printing application is not high.

In the present embodiment, even in a case that a plurality of file icons associated with a plurality of files are dropped, and the plurality of files include both a file not supported by the printing application and a file supported by the printing application (e.g. a file in a format not supported by the printing application and a file in a format supported by the printing application), processing based on the files, such as displaying for preview and transmission of a print job, is not canceled. In the present embodiment, in this case, only the file supported by the printing application can be extracted and processing based on the file can be performed, and thus the user convenience is improved.

In the present embodiment, in a situation in which a file associated with a dropped file icon is present on the Internet and it takes time to acquire and store the file by the OS, processing based on the file is not canceled. In the present embodiment, in this case, the printing application can execute the processing based on the file after the acquisition and storing of the file are completed by the OS, and thus the user convenience is improved. In the case where the predetermined file is present on the Internet, the printing application attempts to acquire the file from a storage region at at least a predetermined time, where the predetermined time is after the file is downloaded from the Internet to the terminal apparatus and completely stored in the storage region. In an example, in the case where the predetermined file is present on the Internet and the printing application may attempt to acquire the file from a storage region in a state in which the storing of the file downloaded to the terminal apparatus via the Internet is not completed, the printing application re-executes the attempt to acquire the file from the storage region. The printing application may repeatedly attempt to acquire the file from the storage region in a state in which the storing of the file downloaded to the terminal apparatus via the Internet is not completed and until the file downloaded via the Internet to the terminal apparatus is completely stored in the storage region. In these examples, even if it takes time to download and store the file from the Internet, the printing application can acquire the file at some point and the processing of the file is not cancelled.

In the present embodiment, in a case that a file icon is dropped on the application icon associated with the printing application in a state in which a printer is not registered in the printing application, processing for registering the printer in the printing application is executed. Therefore, it is possible to suppress the occurrence of a situation in which a print job cannot be transmitted due to the fact that the printer is not registered in the printing application.

### Other Embodiments

In the form described above, specifying only a single file and specifying a plurality of files are switched based on whether a file associated with a file icon dropped on the application icon associated with the printing application is a PDF format file or an image file. However, the process is not limited thereto. Only a single file may be specified regardless of whether the file is a PDF format file or an image file. That is, in the processing in S415, only the first file in the order of a plurality of files that are image files and are associated with file icons dropped on the application icon associated with the printing application may be specified. In addition, only a plurality of files may be specified regardless of whether a file associated with a file icon dropped on the application icon associated with the printing application is a PDF format file or an image file. That is, in the processing in S407, all PDF format files may be specified among a plurality of files associated with file icons dropped on the application icon associated with the printing application.

In the form described above, in a case where the i-th file is neither a PDF format file nor an image file, i is incremented and a file format is determined for a file of the next number. However, the process is not limited thereto. In a case where the first file in the order of the files is neither a PDF format file nor an image file, an error display or the home screen for the printing application may be displayed without the preview screen being displayed. That is, in a case that the CPU 103 determines NO in S413, the process may proceed to processing of displaying the error screen without proceeding to the processing in S414.

The object of various embodiments of the present disclosure can be achieved by supplying a storage medium (storing a program code of software) for implementing the example functions described above to a system or an apparatus and a computer (or CPU or MPU, for example) of the system or the apparatus reading and executing the program code stored in the storage medium. In such cases, the program code read from the storage medium, when executed, implements the functions described above, and the storage medium storing the program code is included within the scope of the present disclosure.

As the storage medium for storing the program code, for example, a flexible disk, a hard disk, an optical disc, a magneto-optical disc, a CD-ROM, a CD-R, a magnetic tape, a nonvolatile memory card, a ROM, a DVD, and the like can be used.

The computer reads and executes the program code to not only implement the functions described in the above description of embodiments but also performs some or all of the processes executed by the operating system (OS) or the like on the computer so as to implement the functions described above by the processes.

According to various embodiments of the present invention, it is possible to improve the convenience of the form in which the information processing apparatus receives an operation of dragging and dropping a file icon. Furthermore, with the various embodiments, it is possible to improve the processing of one or more files at the information processing apparatus after receiving an operation of dragging and dropping one or more file icons so as: to optimize resources (e.g. by attempting to acquire the one or more files after the dropping operation at a predetermined time after the one or more files downloaded via the Internet are completely stored in the storage region); to avoid processing of the one or more files being cancelled (e.g. in the case the printing apparatus is not registered, performing a process of registering the printing apparatus before transmitting the print job) and other improvements as discussed above.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to example embodiments, it is to be understood that the invention is not limited to the disclosed example embodiments. The scope of the invention is defined by the following claims.

## Claims

1. A program that is a predetermined application program comprising instructions which, when the program is executed by a computer of an information processing apparatus (101), cause the computer to execute:
in a case that the information processing apparatus (101) receives a dragging operation of dragging a file icon included in a screen displayed by another application program different from the predetermined application program and a dropping operation of dropping the dragged file icon on an application icon associated with the predetermined application program, attempting, by the predetermined application program and based on the reception of the dropping operation by the information processing apparatus (101), to acquire a predetermined file associated with the dropped file icon from a predetermined storage region; and
in a case that the acquisition of the predetermined file by the predetermined application program is completed, transmitting, by the predetermined application program, a print job for causing a printing apparatus (151) to print an image based on the predetermined file, wherein
in a case where the predetermined file is present on the Internet, the predetermined application program attempts to acquire the predetermined file from the predetermined storage region at at least a predetermined time, and
the predetermined time is after the predetermined file downloaded to the information processing apparatus (101) via the Internet is completely stored in the predetermined storage region.

2. The program according to claim 1, wherein
in a case that the predetermined file is present on the Internet, and the predetermined application program attempts to acquire the predetermined file from the predetermined storage region in a state in which the storing of the predetermined file downloaded to the information processing apparatus (101) via the Internet is not completed, the predetermined application program re-executes the acquisition of the predetermined file from the predetermined storage region.

3. The program according to claim 1 or 2, wherein
in a case that the predetermined file is present on the Internet, and the predetermined application program attempts to acquire the predetermined file from the predetermined storage region in a state in which the storing of the predetermined file downloaded to the information processing apparatus (101) via the Internet is not completed, the predetermined application program repeatedly attempts to acquire the predetermined file from the predetermined storage region until the predetermined file downloaded to the information processing apparatus (101) via the Internet is completely stored in the predetermined storage region.

4. The program according to any one of claims 1 to 3, when executed causes the computer to further execute:
in a case that the acquisition of the predetermined file by the predetermined application program is completed, displaying a preview screen on which an image based on the predetermined file is displayed, wherein
the print job is transmitted after the preview screen is displayed.

5. The program according to claim 4, wherein
in a case that the received dropping operation is an operation of dropping a plurality of file icons on the application icon associated with the predetermined application program, the preview screen for previewing a plurality of images based on a plurality of files associated with the plurality of file icons is displayed.

6. The program according to claim 4, wherein
in a case that the received dropping operation is an operation of dropping a plurality of file icons on the application icon associated with the predetermined application program, and a first file among a plurality of files associated with the plurality of file icons is in a predetermined file format, the preview screen for previewing only an image based on the first file is displayed, and
in a case that the received dropping operation is the operation of dropping the plurality of file icons on the application icon associated with the predetermined application program, and the first file is in a file format different from the predetermined file format, the preview screen for previewing only one or more images based on one or more files in the file format different from the predetermined file format among the plurality of files associated with the plurality of file icons is displayed.

7. The program according to claim 6, wherein
the predetermined file format is a PDF format.

8. The program according to any one of claims 1 to 7, wherein
in a case that the dropping operation is an operation of dropping a file icon in a first file format on the application icon associated with the predetermined application program, the predetermined application program executes the acquisition of the predetermined file from the predetermined storage region, and
in a case that the dropping operation is an operation of dropping a file icon in a second file format different from the first file format on the application icon associated with the predetermined application program, the predetermined application program does not execute the acquisition of the predetermined file from the predetermined storage region.

9. The program according to claim 8, wherein
the first file format is at least one of a PDF format, a JPEG format, a HEIF format, and a PNG format.

10. The program according to any one of claims 1 to 9, wherein
the predetermined file is acquired by the predetermined application program after an operating system of the information processing apparatus (101) executes, based on the received dropping operation, processing for sharing the predetermined file with the predetermined application program by a predetermined method, and
the predetermined method is scene(_:openURLContexts:) defined in a UISceneDelegate protocol.

11. The program according to any one of claims 1 to 10, when executed causes the computer to further execute:
in a case that the dropping operation is received, determining whether a printing apparatus has been registered in the predetermined application program, wherein
based on the determination that the printing apparatus has not been registered in the predetermined application program, processing of registering the printing apparatus in the predetermined application program is executed before the print job is transmitted, and
based on the determination that the printing apparatus has been registered in the predetermined application program, processing of displaying a preview screen on which an image based on the predetermined file is displayed is executed.

12. The program according to any one of claims 1 to 11, when executed causes the computer to further execute:
in a case that the dragged file icon is received on the icon associated with the predetermined application in the dropping operation, acquiring a file path indicating the predetermined storage region from an operating system of the information processing apparatus (101), wherein
the acquisition of the predetermined file from the predetermined storage region is executed based on the file path.

13. The program according to claim 10 or claim 12, wherein
an operating system of the information processing apparatus (101) is at least one of iOS (registered trademark) 17, iPadOS (registered trademark) 17, and iOS (registered trademark) of a version later than iOS (registered trademark) 17.

14. A method for controlling an information processing apparatus (101) having a predetermined application program, the method comprising:
in a case that the information processing apparatus (101) receives a dragging operation of dragging a file icon included in a screen displayed by another application program different from the predetermined application program and a dropping operation of dropping the dragged file icon on an application icon associated with the predetermined application program, attempting, by the predetermined application program and based on the reception of the dropping operation by the information processing apparatus (101), to acquire a predetermined file associated with the dropped file icon from a predetermined storage region; and
in a case that the acquisition of the predetermined file by the predetermined application program is completed, transmitting, by the predetermined application program, a print job for causing a printing apparatus (151) to print an image based on the predetermined file, wherein
in a case where the predetermined file is present on the Internet, the predetermined application program attempts to acquire the predetermined file from the predetermined storage region at at least a predetermined time, and
the predetermined time is after the predetermined file downloaded to the information processing apparatus (101) via the Internet is completely stored in the predetermined storage region.

15. An information processing apparatus (101) having a predetermined application program, the information processing apparatus (101) comprising:
an attempting unit (103) configured to, in a case that the information processing apparatus (101) receives a dragging operation of dragging a file icon included in a screen displayed by another application program different from the predetermined application program and a dropping operation of dropping the dragged file icon on an application icon associated with the predetermined application program, attempt, based on the reception of the dropping operation by the information processing apparatus (101), to acquire a predetermined file associated with the dropped file icon from a predetermined storage region; and
a transmission unit (103) configured to, in a case that the acquisition of the predetermined file by the attempting unit (103) is completed, transmit a print job for causing a printing apparatus (151) to print an image based on the predetermined file, wherein
in a case where the predetermined file is present on the Internet, the attempting unit (103) is configured to attempt to acquire the predetermined file from the predetermined storage region at at least a predetermined time, and
the predetermined time is after the predetermined file downloaded to the information processing apparatus (101) via the Internet is completely stored in the predetermined storage region.
